Europäisches Patentamt

European Patent Office

Office européen des brevets

(19)

(11) Veröffentlichungsnummer: **0 365 832 B1**

(12) # EUROPÄISCHE PATENTSCHRIFT

(45) Veröffentlichungstag der Patentschrift: **08.12.93**

(51) Int. Cl.⁵: **E06B 3/66**

(21) Anmeldenummer: **89117548.1**

(22) Anmeldetag: **22.09.89**

(54) **Mehrscheibenisolierglas sowie Abstandhalter für das Mehrscheibenisolierglas.**

(30) Priorität: **27.09.88 DE 8812216 U**

(43) Veröffentlichungstag der Anmeldung:
**02.05.90 Patentblatt 90/18**

(45) Bekanntmachung des Hinweises auf die
Patenterteilung:
**08.12.93 Patentblatt 93/49**

(84) Benannte Vertragsstaaten:
**AT BE CH DE ES FR GB GR IT LI LU NL SE**

(56) Entgegenhaltungen:
EP-A- 0 083 797      EP-A- 0 250 386
DE-A- 2 037 288      DE-A- 2 518 205
DE-A- 2 526 438      DE-A- 3 621 765
FR-A- 2 352 146

(73) Patentinhaber: **Helmut Lingemann GmbH & Co.
Am Deckershäuschen 62
D-42111 Wuppertal(DE)**

(72) Erfinder: **Lingemann, Horst
Horather Strasse 247
D-5600 Wuppertal(DE)**

(74) Vertreter: **Patentanwälte Dr. Solf & Zapf
Postfach 13 01 13
D-42028 Wuppertal (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Abstandhalter für ein Mehrscheiben-Isolierglas, der im Oberbegriff des Anspruchs 1 angegebenen Art.

Ein derartiger Abstandhalter ist aus der DE-A 25 26 438 bekannt. Der Isolierstoffsteg im Zwischenraum zwischen den beiden Hohlprofilen dieses Abstandhalters besteht aus einem synthetischen Kautschuk bzw. aus einem elastomeren Kunststoff. Aufgrund eines derart ausgebildeten Isolierstoffstegs mangelt es diesem Abstandhalter an Festigkeit und Verwindungssteifheit.

Eine weiterer Abstandhalter der eingangs genannten Art ist aus der FR-A 2 352 146 bekannt. Der Isolierstoffsteg dieses Abstandhalters besteht aus einem akustisch dämmenden Buthylwerkstoff, dessen Festigkeit ebenfalls zu wünschen übrig läßt.

Aus der DE-A 2 037 288 ist ein massiver Wasserdampf-durchlässiger Abstandhalter für elektrisch beheizbare Mehrscheibenisoliergläser aus Kunststoff mit im wesentlichen rechteckigem Querschnittsprofil bekannt, wobei in der Kunststoffmasse hygroskopisches Material enthalten ist. Die Kunststoffmasse kann unter anderem ein Urethan-Elastomer sein. Ein derartiges Elastomer ist jedoch nicht geeignet, dem Abstandhalter die notwendige Verwindungssteifheit zu verleihen. Aus der EP-A 2 250 386 ist ein Abstandhalter für ein Mehrscheibenisolierglas bekannt, der ein zentrales Aluminiumvollteil-Versteifungselement umfaßt, an das beidseitig elastomere Dichtungsstopfen angrenzen. Aufgrund dieser Konstruktion ist der bekannte Abstandhalter nicht verwindungssteif.

Die DE-A1 36 21 765 betrifft Polyurethangießmassen, die mineralische Hohlkörper als Füllstoffe enthalten und bei der Herstellung von Isolierstegen für Metall-Verbundprofile verwendbar sind. Um zu verhindern, daß Sägeblätter, mit denen die Verbundprodukte abgelenkt werden, zu schnell verschleißen, wird vorgeschlagen, die Gießmassen mit Hohlkörpern auf Basis von Alkali-Aluminium-Silikanten zu füllen.

In der EP-A1 83 797 wird die Verwendung von hydrolysestabilen Einkomponenten- oder Mehrkomponentensystemen auf der Basis von organischen Polyisocyanathen und ausgewählten Polyhydroxyl-Verbindungen zur Herstellung von gegenüber Chemikalien und UV-lichtstabilen Verbundmassen für Glaskonstruktionen beschrieben. Die Einkomponenten- oder Mehrkomponentensysteme sind Dichtstoffe und Beschichtungsmittel für Isolierglasscheiben, bei denen es darauf ankommt, eine gute Dauerhaftung auf dem Glas zu gewährleisten. Die vorgeschlagenen Polyurethan-Dichtungsmittel sind dauerelastische Dichtstoffe auf Polyurethan-Basis, die bei niedrigen Temperaturen ihre Plastizität und Elastizität beibehalten. Aufgrund ihrer Elastizität und Plastizität sind diese Polyurethan-Dichtungsmittel nicht geeignet, um als Isolierstoffstegmaterial den eingangs genannten Abstandhalter verwindungssteif zu gestalten.

Der Erfindung liegt die Aufgabe zugrunde, einen Abstandhalter der eingangs genannten Art zu schaffen, der neben einer hervorragenden Festigkeit und Verwindungssteifheit eine äußerst geringe Wärmeleitfähigkeit und eine ebenso geringe elektrische Leitfähigkeit gewährleistet.

Diese Aufgabe wird durch die Merkmale des Anspruchs 1 und gelöst. Vorteilhafte Weiterbildungen der Erfindung sind in den von diesen Ansprüchen abhängigen Ansprüchen gekennzeichnet. Anhand der Zeichnung wird die Erfindung im folgenden beispielhaft näher erläutert. Es zeigen:

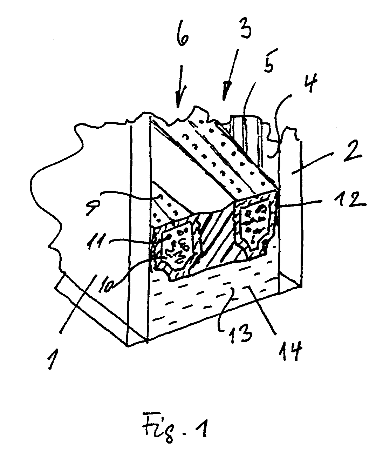

Fig. 1     perspektivisch und schematisch einen Ausbruch aus dem Aufbau eines beheizbaren Mehrscheibenisolierglases,

Fig. 2     eine Frontalansicht auf einen Abstandhalter.

Das beheizbare Mehrscheibenisolierglas wird in einen Rahmen eines Fensters oder einer Tür (nicht dargestellt) gesetzt. Es besteht im wesentlichen aus den beiden parallel nebeneinander und auf Abstand zueinander angeordneten Glasscheiben 1 und 2, zwischen denen ein Zwischenraum 3 vorgesehen ist. Auf der zwischenraumseitigen Fläche 4 der einen Glasscheibe 2 sind Leiterbahnen 5 eines Widerstandsheizelements (nicht dargestellt) z.B. aufgedampft. Die elektrischen Anschlüsse und der gesamte Aufbau des Widerstandsheizelements brauchen nicht beschrieben zu werden, weil sie zum Stand der Technik gehören und für die Zwecke der Erfindung nicht kritisch sind.

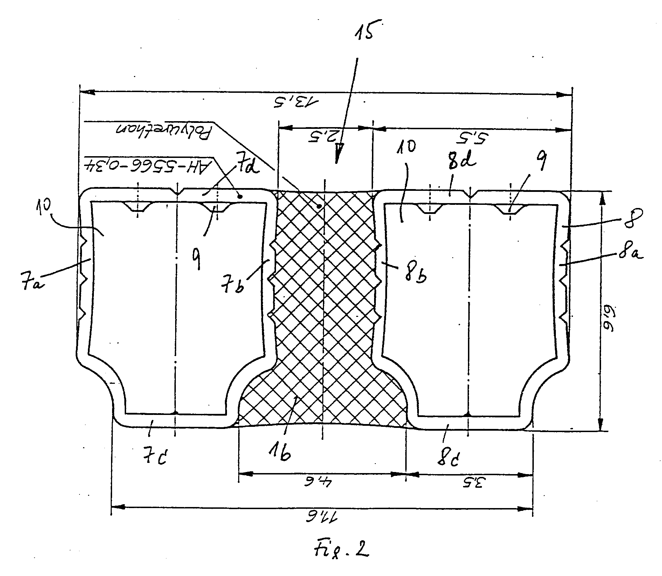

Den Zwischenraum 3 überbrückt ein Abstandhalter 6, der in Fig. 2 frontal dargestellt ist und dessen Aufbau erfindungswesentlich ist.

Der Abstandhalter 6 besteht aus vorzugsweise zwei parallel nebeneinander und auf Abstand zueinander angeordneten Aluminium-Hohlprofilen 7 und 8 mit zu den Glasscheibenoberflächen parallelen Seitenwandungen 7a, 7b bzw. 8a, 8b einer Bodenwandung 7c, 8c und einer Deckenwandung 7d, 8d. In die Deckenwandung sind Durchgangslöcher 9 eingebracht, die - wie bekannt - eine Verbindung zwischen dem mit Trockenmittel 11 gefüllten Innenraum 10 der Hohlprofile 7, 8 und dem Zwischenraum 3 schaffen. Zwischen den Wandungen 7a und 8a und den zwischenraumseitigen Oberflächen der Glasscheiben 1 und 2 ist zweckmäßigerweise, wie an sich bekannt, Butyl 12 angeordnet. Es können aber auch andere Verbindungsstoffe dort vorgesehen sein.

Der Raum 13 unter dem Abstandhalter 6 ist zweckmäßigerweise ausgefüllt mit z.B. Thiokol 14.

Wesentlich ist, daß der Zwischenraum 15 zwischen den beiden Hohlprofilen 7, 8 mit einem Produkt ausgefüllt ist, das einen harten Stoff ergibt, der sich fest mit Aluminium verbindet bzw. fest am Aluminium haftet und einen einheitlich festen verwindungssteifen Abstandhalter schafft, und der vor allem elektrisch hervorragend isoliert und außerdem auch eine äußerst geringe Wärmeleitfähigkeit aufweist. Zudem muß das Produkt bzw. der Stoff UV- und wärmebeständig sein. Durch eine erfindungsgemäße Auswahl ist der richtige Stoff gefunden worden.

Nach der Erfindung ist zwischen den Hohlprofilen 7, 8 ein fester Isoliersteg 16 angeordnet, der aus einer ungeschäumten ausgehärteten Polyurethanvergußmasse besteht. Der Rohstoff für diesen Isolierstoffsteg 16 wird unter der Handelsbezeichnung "Baydur VP PU 1397" der Bayer AG gehandelt. Es ist eine fertig formulierte phaseninstabile, niedrig viskose Polyolformulierung, welche ein wasserbindendes Zusatzmittel enthält. Vor der Verarbeitung muß die Abmischung gut homogenisiert werden. Während der Verarbeitung soll ständig langsam gerührt werden. Die Formulierung hat die folgenden Eigenschaften:

| | |
|---|---|
| Hydroxylzahl (mg KOH/g) | 355 ± 20 |
| Wassergehalt (%) | < 0,20 |
| Viskosität** bei 25 °C (mPa·s) | 1200 ± 200 |
| pH-Wert | ca 11,5 |
| Dichte bei 25 °C (g/cm$^3$) | ca. 1,05 |
| Flammpunkt*** ( °C) | 120 °C |
| Erstarrungsbereich ( °C) | - 28 bis - 26 °C |

Die untere Grenze der Verarbeitungstemperatur liegt bei 23 °C. Die Aktivität von Baydur VP PU 1397 kann bei Temperaturen oberhalb 35 °C verändert werden.

Die Verarbeitungstemperatur der Rohstoffe sollte mindestens 23 °C betragen. Bei einer Kennzahl von 108 ergeben sich folgende Verarbeitungsrezepturen:

```
         100 Gew.-Tle. Baydur VP PU 1397
         ──────────────────────────────────
          97 Gew.-Tle. Desmodur 44 V 10 B
    oder  97 Gew.-Tle. Desmodur 44 V 20 B
```

Die folgenden Verarbeitungskenndaten sind bei 28 °C Rohstofftemperatur ermittelt und sind für das System charakteristisch:

| | |
|---|---|
| Gelierzeit (s) | 30 ± 10 |
| Werkzeugtemp. ( °C) | 30 - 75 |
| Rohdichte formgegossen (kg/m$^3$) | 1180 |

Für die richtige Mischung werden z.B. bei einer Verarbeitungstemperatur der Rohstoffe von 23 °C 1000 kg Baydur VP PU 1397 mit 970kg Desmodur 44 V 10 B eingewogen und mit einem Rührer mit etwa 2000 U/min 10 Sekunden verrührt. Die Abbindezeit zwischen Rührbeginn und Abbinden des Reaktionsgemisches beträgt 60 ± 10 Sekunden. Zum Zeitpunkt des Abbindens verfestigt sich die Vergußmasse schlagartig.

Baydur VP PU 1397 ist eine Zubereitung auf Basis von Polyolen.

Der Isolierstoffsteg 16 hat z.B. die folgenden Eigenschaften:

| | | | Baydur VP PU 1397/Desmodur 44 V 10 B |
|---|---|---|---|
| Prüfkörperdicke | | mm | 1010 |
| Rohdichte | DIN 53432 | kg/m$^3$ | 1170 |
| Biegefestigkeit | DIN 53432 | MPa | 72 |
| Durchbiegung b. Bruch | DIN 53432 | mm | 20 |
| Biege-E-Modul | | MPa | 1500 |
| Zugfestigkeit | DIN 53432* | MPa | 47 |
| Reißdehnung | DIN 53432 | % | 21 |
| Schlagzähigkeit | DIN 53432 | kJ/m$^2$ | 60 |
| Härte nach Shore-D | DIN 53505 | | 74 |
| Verhalten in der Wärme b. Biegebeanspruchung | DIN 53432** | °C | 110 |

Die Verarbeitungsschwindung beträgt lediglich 0,8 ± 0,1% Fertigungstoleranz. Dieser Wert gilt für die Herstellung eines bis zu 10 mm dicken Isolierstoffstegs 13 bei einer Rohdichte von 1180 kg/m$^3$ bei Einhaltung der angegebenen Verarbeitungsrezeptur mit Desmodur 44 V 10 B und einer Formverweilzeit von 1 Minute in einem auf 75°C temperierten Werkzeug.

Desmodur 44 V 10 B ist ein flüssiges, lösungsmittelfreies Diphenylmethan-4,4′-diisocyanat mit einem bestimmten Gehalt an Isomeren und höherfunktionellen Homologen. Es wird in Verbindung mit Polyolen zur Herstellung von Baydur eingesetzt. Es weist in der Regel die folgende Lieferspezifikation auf:

| | |
|---|---|
| Gehalt an Isocyanat | 31,5 Gew.-% ± 1 Gew.-% |
| Viskosität bei 25°C | 130 mPa.s ± 20 mPa.s |
| Acidität | max. 0,06 Gew.-% |
| Gesamtchlor | max. 0,5 Gew.-% |
| Gehalt an Phenylisocyanat | max. 50 ppm |

Die technischen Eigenschaften sind:

| | |
|---|---|
| Farbe | braun |
| Dichte bei 20°C | 1,23-1,24g/cm$^3$ |
| Flammpunkt | über 200°C |
| Dampfdruck (MDI) bei Raumtemperatur | <10$^{-5}$mbar |

Durch die Auswahl dieses Stoffes ist es gelungen, einen für die Zwecke der Erfindung optimalen Abstandhalter zu schaffen. Die Breite des festen Isolierstoffstegs 16 beträgt vorzugsweise 1/3 bis 1/6 der Gesamtbreite des Abstandhalters.

Wenn man bedenkt, daß Abstandhalter aus Kunststoff die langfristigen Garantieanforderungen der Prüfinstitute und Isolierglashersteller in Verbindung mit Dichtstoffen nicht erfüllt, kann als überrraschend gelten, daß der im Rahmen der Erfindung ausgewählte Stoff für den Isolierstoffsteg 16 alle geforderten Eigenschaften erfüllt. Z.B. sind bei zwei 5,5 mm breiten geschweißten Abstandhalterprofilen 7, 8 - die sich durch eine große Eigenstabilität hervorragend eignen - mit dem erfindungsgemäß ausgewählten Kunststoff, der die thermische und elektrische Trennung bewirken soll, kombiniert worden. Als Eckverbinder können Kunststoffwinkel verwendet werden, um auch im Eckbereich optimale Trenneigenschaften zu erreichen. Darüber hinaus ist aber auch überraschen, daß das neue Abstandhalterprofil im Eckbereich zur Ecke gebogen werden kann, ohne daß der Kunststoff die Biegung behindert.

Der erfindungsgemäß ausgewählte Kunststoff erfüllt die folgenden Anforderungen:
- Temperaturbeständigkeit > 70°C und > minus 35°C
- gute Verbindungseigenschaften mit Aluminium
- gute Verbindungseigenschaften mit den für die Aluminiumproduktion notwendigen Dichtstoffen

- Gasdiffusionsbeständigkeit
- Trennung der elektrischen Leitfähigkeit
- Herabsetzung auf ein Minimum der thermischen Diffusion

Eine weitere günstige Eigenschaft des ausgewählten Polyurethan-Kunststoffs ist, daß er dauerhaft mit den bereits für Aluminium-Abstandhalter entwickelten Lacken kombiniert werden kann, so daß auch farbige Abstandhalter geschaffen werden können. Insbesondere ist die Verwendung von UV-beständigen Lacken möglich.

Eine weitere besonders wichtige Möglichkeit besteht darin, den Polyurethan-Kunststoff einzufärben und auf diese Weise einen dekorativen Abstandhalter zu schaffen.

Ein extrudiertes Kunststoffprofil in Verbindung mit Klebstoffen zum einem stabilen verwindungssteifen System zu bringen, sind aufgrund zu geringer Eigenstabilität sowie der Gefahr des Ausdiffundierens der Klebstoffe als auch wegen des aufwendigen Handlings gescheitert. Hinzu kommen die enormen Produktionskosten, die aus der aufwendigen Fertigungsmethode resultieren.

Die Verwendung von zwei Abstandhalterprofilen im Durchlauf mit einem flüssigen Zweikomponentenpolyurethan-Kunststoff führt zur Herstellung eines optimalen Abstandhalters. Die kontinuierliche synchrone Applikation des Polyurethans zwischen zwei parallel zueinanderlaufenden Abstandhalterprofilen und die anschließende Aushärtung führen zu einem kompakten Verbund der Abstandhalter. Diese erfüllen somit die oben geforderten Bedingungen. Es ist somit eine Problemlösung gefunden worden, die nicht ohne weiteres erkennbar war.

Während bei bekanntem beheizbaren Mehrscheibenisolierglas Wärmedämmwerte zwischen 1,1 bis 2,6 W/m²K angegeben werden und in Prüfberichten derartiger Mehrscheibenisoliergläser Werte zwischen 2,83 und 2,88 W/m²K gemessen werden, muß als überraschend gelten, daß das erfindungsgemäße Mehrscheibenisolierglas Werte für den Wärmedurchgangskoeffizienten bzw. Wärmedämmwert um 0,45, insbesondere zwischen 0,3 und 0,7 W/m²K gewährleistet. Woraus dieser außergewöhnlich hohe Unterschied der Werte resultiert, ist derzeit noch nicht bekannt.

Die elektrische Isolierung des Isolierstoffstegs 16 ist zudem hundertprozentig.

## Patentansprüche

1. Abstandhalter (6) für ein Mehrscheibenisolierglas mit wenigstens zwei durch den Abstandhalter auf Abstand gehaltenen Glasscheiben, wobei der Abstandhalter (6) zur Unterbrechung der Wärmeleitung aus zwei parallel nebeneinander auf Abstand zueinander angeordneten, Seitenwandungen (7a, 7b bzw. 8a, 8b) aufweisenden Metallhohlprofilen (7, 8) und einem Isolierstoffsteg (16) im Zwischenraum (15) zwischen den beiden Hohlprofilen (7, 8) besteht,

   dadurch **gekennzeichnet,**

   daß der Isolierstoffsteg (16) aus einem harten Kunststoff aus einer Polyurethanvergußmasse mit geringer Wärmeleitfähigkeit und geringer elektrischer Leitfähigkeit besteht, der direkt fest an der Oberfläche der Seitenwandungen (7b, 8b) der Hohlprofile (7, 8) haftet und mit letzteren zusammen ein einteiliges festes, verwindungsteifes Abstandhalterelement bildet, daß der Kunststoff des Isolierstoffstegs (16) aus einer Mischung aus einer fertig formulierten phaseninstabilen niedrig viskosen Polyolformulierung, die ein wasserbindendes Zusatzmittel enthält (Baydur VP PU 1397), mit einem flüssigen, lösungsmittelfreien Diphenylmethan-4,4'-diisocyanat mit einem Gehalt an Isomeren und höherfunktionellen Homologen (Desmodur 44 V10 B oder Desmodur 44 V20 B) hergestellt ist (Baydur: Hersteller Bayer AG; Desmodur: Hersteller Bayer AG), und daß 90 bis 110, insbesondere 100 Gewichtsteile Baydur VP PU 1397 und 90 bis 100, insbesondere 97 Gewichtsteile Desmodur 44 V10 B oder Desmodur 44 V20B verwendet sind.

2. Abstandhalter nach Anspruch 1,
   dadurch **gekennzeichnet,**
   daß der Isolierstoffsteg (16) aus 1000 Kg Baydur VP PU 1397 und 970 kg Desmodur 44 V10 B bei einer Verarbeitungstemperatur von 23 °C und einer Rührzeit von 10 Sekunden mit einem Rührer, der etwa 2000 U/min macht, hergestellt ist, wobei die Abbindezeit zwischen Rührbeginn und Abbinden 60 ± 10 Sekunden betragen hat.

3. Abstandhalter nach Anspruch 1 oder 2,
   dadurch **gekennzeichnet,**
   daß die Abstandhalterhohlprofile (7, 8) aus Aluminium bestehen.

**4.** Abstandhalter nach einem oder mehreren der Ansprüche 1 bis 3,
dadurch **gekennzeichnet,**
daß die Hohlprofile (7, 8) aus Stahl bestehen.

**5.** Verwendung eines Abstandhalters nach einem oder mehreren der Ansprüche 1 bis 4 zur Erstellung eines beheizbaren Mehrscheibenisolierglases mit gasgefülltem oder evakuiertem Zwischenraum und einem Widerstandsheizelement auf einer zwischenraumseitigen Glasscheibenoberfläche sowie Anschlüssen für die Zuführung eines elektrischen Stromes zu dem Widerstandsheizelement.

**Claims**

**1.** Spacer mount (6) for a multilayer insulating glass in which at least two glass panes are held apart by the spacer mount (6), wherein the spacer mount to interrupt the heat flow consists of two parallel side walls (7a, 7b respectively 8a, 8b) providing metal hollow profiles arranged side by side in the space and a web (16) of insulating material in the interspace (15) between both hollow profiles (7,8) characterised in that the web (16) of insulating material comprises a hardened plastics comprising a cured polyurethane mass having low heat conductivity and low electrical conductivity, which is bonded directly to the surfaces of the sidewalls (7b, 8b)of the hollow profile (7, 8) and together with these forms an integral twist-resistant spacer mount, that the plastics of the web (16) of insulating material is made of a mixture of a pre-formulated low viscosity polyol formulation having unstable phases which contains a water binder additive (Baydur VI, PU 1397) which is produced from a liquid solvent-free diphenyl methane -4,4$^1$- diisocyanate having a content of isomers and higher functional homologues (Desmodur 44 V 10B or Desmodur 44 V 20B (manufacturer of Baydur: Bayer AG: manufacturer of Desmodur: Bayer AG) and that 90 to 110, especially 100 weight parts Baydur VP PU 1397 and 90 to 100, especially 97 weight parts Desmodur 44 V 10B or Desmodur 44 V 20B are used.

**2.** Spacer mount according to Claim 1, characterised in that the web (16) of insulating material is produced from 1000Kg Baydur VP PU 1397 and 790Kg Desmodur 44V10B at a processing temperature of 23°C and a stirring time of 10 seconds with a stirrer rotated at about 2000 revs/min whereby the setting time between start of stirring and setting lasts 60 ± 10 seconds.

**3.** Spacer mount according to Claim 1 or 2, characterised in that the spacer mount hollow profile (7, 8) consists of aluminium.

**4.** Spacer mount according to one or more of Claims 1 to 3 characterised in that the hollow profile (7, 8) consists of steel.

**5.** Use of a spacer mount according to one or more of Claims 1 to 4 for the construction of a heatable multi-layer insulating glass having a gas filled or evacuated interspace and having a resistance heating element on one of the glass pane surfaces facing the interspace together with conductors for the passage of an electric current to the resistance heating element.

**Revendications**

**1.** Ecarteur (6) pour un vitrage isolant à plusieurs carreaux comportant au moins deux carreaux de verre maintenus à distance par l'écarteur, l'écarteur (6) étant constitué, pour l'interruption de la conduction thermique, de deux profilés métalliques creux (7, 8) présentant des parois latérales (7a, 7b ou 8a, 8b) parallèles, disposés à distance l'un de l'autre, et d'une entretoise en matière isolante (16) dans l'espace intermédiaire (15) entre les deux profilés creux (7, 8), caractérisé en ce que l'entretoise en matière isolante (16) est constituée d'une matière plastique rigide formée à partir d'une masse de coulée de polyuréthanne ayant une faible conductibilité thermique et une faible conductibilité électrique, qui adhère directement d'une manière solide à la surface des parois latérales (7b, 8b) des profilés creux (7, 8) et qui forme avec ces derniers un élément d'écarteur en une seule partie, solide, rigide au gauchissement, en ce que la matière plastique de l'entretoise (16) en matière isolante est préparée à partir d'un mélange d'une formule de polyol prête à l'emploi, à phases instables, de faible viscosité, qui contient un additif fixant l'eau (Baydur VP PU 1397) avec un diphénylméthane-4,4'-diisocyanate liquide, exempt de solvant, contenant des isomères et des homologues de fonctionnalité supérieure (Desmodur 44 V10 B ou Desmodur 44 V20 B) (Baydur : fabricant Bayer AG ; Desmodur : fabricant Bayer AG) et en ce qu'on utilise 90 à 110, en particulier 100 parties en poids de Baydur VP PU 1397 et 90 à 100, en particulier 97 parties en poids de Desmodur 44 V10 B ou de Desmodur 44 V20 B.

2. Ecarteur selon la revendication 1, caractérisé en ce que l'entretoise (16) en matière isolante est préparée à partir de 1000 kg de Baydur VP PU 1397 et de 790 kg de Desmodur 44 V10 B à une température d'utilisation de 23°C et une durée d'agitation de 10 secondes avec un agitateur qui tourne aux environs de 2000 t/mn, le temps de durcissement entre le début de l'agitation et le durcissement étant de 60 ± 10 secondes.

3. Ecarteur selon la revendication 1 ou 2, caractérisé en ce que les profilés creux d'écarteur (7, 8) sont en aluminium.

4. Ecarteur selon l'une ou plusieurs des revendications 1 à 3, caractérisé en ce que les profilés creux (7, 8) sont en acier.

5. Utilisation d'un écarteur selon l'une ou plusieurs des revendications 1 à 4 pour la fabrication d'un vitrage isolant à plusieurs carreaux chauffable avec un espace intermédiaire rempli de gaz ou dans lequel on a fait le vide, et une résistance chauffante sur une surface de carreaux de verre du côté de l'espace intérieur, ainsi que des raccordements pour l'amenée d'un courant électrique à la résistance chauffante.

Fig. 1

Fig. 2